# EUROPÄISCHE PATENTSCHRIFT

(11) **EP 2 292 498 B1**
(45) Veröffentlichungstag und Bekanntmachung des Hinweises auf die Patenterteilung: **02.04.2014**
(21) Anmeldenummer: 10008447.4
(22) Anmeldetag: 13.08.2010
(51) Int. Cl.: B62D 15/02, G08G 1/14, G08G 1/16, G01S 13/93

(54) **Verfahren und Vorrichtung zur Unterstützung eines Einparkvorgangs eines Fahrzeugs**
Method and device to support the parking procedure of a motor vehicle
Procédé et dispositif destinés à assister un processus de stationnement d'un véhicule automobile

(30) Priorität: 07.09.2009 DE 102009040375
(43) Veröffentlichungstag der Anmeldung: 09.03.2011
(73) Patentinhaber: Valeo Schalter und Sensoren GmbH, 74321 Bietigheim-Bissingen (DE)
(72) Erfinder: Görg, Steffen, 74336 Brackenheim (DE); Jecker, Nicolas, 73730 Esslingen (DE)

(56) Entgegenhaltungen:
- EP-A1- 1 683 707
- EP-A2- 2 081 167
- WO-A1-2009/078356
- DE-A1- 10 321 904
- JP-A- 11 255 052
- JP-A- 2009 154 766

## Beschreibung

Die Erfindung betrifft ein Verfahren und einer Vorrichtung zur Unterstützung eines Einparkvorgangs eines Fahrzeugs der im Oberbegriff des Anspruchs 1 bzw. 10 genannten Art.

Aus der DE 10 2005 037 468 A1 sind bereits ein derartiges Verfahren sowie eine zugehörige Vorrichtung bekannt. Das Verfahren zur Unterstützung des Einparkvorgangs umfasst die Schritte: Vermessen der Parklücke mittels einer Parklückenvermessungseinrichtung, Festlegung einer Parkposition des Fahrzeugs innerhalb der Parklücke mittels einer Auswerteeinrichtung sowie Bestimmung von Einparkbahnen des Fahrzeugs in die Parkposition mittels der Auswerteeinrichtung. Dabei können von der Auswerteeinrichtung mehrere geeignete ein- oder mehrzügige Einparkbahnen in die Parkposition bestimmt werden, von denen der Fahrer dann mittels einer Auswahleinrichtung die gewünschte Einparkbahn auswählt. Die Parkposition wird dabei von der Auswerteeinrichtung so festgelegt, dass die Mittel-Längsachse des Fahrzeugs in der Parkposition im Wesentlichen mit der Mittel-Längsachse der Parklücke übereinstimmt.

Diese Festlegung hat den Nachteil, dass bei sehr breiten Parklücken keine optimale Parkposition erreicht wird und keine Unterstützung des Einparkvorganges möglich ist, wenn ein Parkplatz nur auf einer Seite durch ein Hindernis begrenzt ist.

WO 2009/078356 A1 ist als nächstliegender Stand der Technik nach dem Oberbegriff des Anspruchs 1 zusehen und offenbart ein System, das elektromagnetische Wellen in vorgegebenen Zeitabständen aussendet, um einen vorbestimmten Winkelbereich um das eigene Fahrzeug herum in der horizontalen Richtung abzutasten. Wenn die reflektierten Wellen der elektromagnetischen Wellen, die von einem Objekt reflektiert werden, empfangen werden, werden die Punkte auf dem Objekt, wo die elektromagnetischen Wellen reflektiert werden, basierend auf den Empfangsergebnissen der reflektierten Wellen detektiert. Ob eine Parklücke vorhanden ist oder nicht, wird auf der Grundlage der gespeicherten Körpermaßdaten des eigenen Fahrzeugs und der Anordnung der Reflexionspunkte beurteilt. Weiter wird beurteilt, ob ein Fahrzeug in der Parklücke geparkt werden kann oder nicht.

Aufgabe der Erfindung ist es, ein Verfahren und eine Vorrichtung zur Unterstützung eines Einparkvorgangs eines Fahrzeugs der im Oberbegriff des Anspruchs 1 bzw. 9 genannten Art dahingehend weiterzuentwickeln, dass die Unterstützung des Einparkvorganges bei Parkplätzen mit großer Breite verbessert wird.

Diese Aufgabe wird erfindungsgemäß durch ein Verfahren gemäß Anspruch 1 sowie eine Vorrichtung gemäß Anspruch 9 gelöst. Weitere die Erfindung in vorteilhafter Weise ausgestaltende Merkmale enthalten die Unteransprüche.

Der mit der Erfindung erzielte Vorteil besteht darin, dass auch bei sehr breiten Parkplätzen eine optimale Parkposition erzielt werden kann, da mittels der Messeinrichtung zusätzlich zur Breite des Parkplatzes die Parkposition wenigstens eines geparkten Fahrzeugs in einem benachbarten Parkplatz ermittelt und von der Auswerteeinrichtung bei der Festlegung der Parkposition des Fahrzeugs berücksichtigt wird.

Schwierigkeiten bei der Festlegung der Parkposition können sich insbesondere bei Parkplätzen ergeben, welche etwa doppelt so breit wie die übliche Fahrzeugbreite sind. Bei derartigen Parkplätzen ist es in der Regel schwierig zu entscheiden, ob das zu parkende Fahrzeug mittig oder außermittig in dem Parkplatz platziert werden soll, um auf dem Parkplatz noch Raum für ein zweites Fahrzeug zu lassen.

Gerade bei solchen Parkplätzen wird durch das erfindungsgemäße verfahren die Unterstützung verbessert, indem die Parkposition wenigstens eines auf einem benachbarte Parkplatz geparkten Fahrzeugs ermittelt und bei der Festlegung der Parkposition des zu parkenden Fahrzeugs berücksichtigt wird. Da benachbarte Parkplätze üblicherweise eine ähnliche Breite aufweisen, liefert die Parkposition des geparkten Fahrzeugs einen Anhaltspunkt, wie das Fahrzeug auf dem Parkplatz zu platzieren ist, d. h. insbesondere ob das Fahrzeug mittig oder außermittig auf dem Parkplatz geparkt werden soll. Das zu parkenden Fahrzeug kann dann so auf seinem Parkplatz angeordnet werden, dass es eine ähnliche Parkposition wie das auf dem benachbarten Parkplatz geparkte Fahrzeug aufweist.

Bei der Ermittlung der Parkposition des geparkten Fahrzeugs werden die seitlichen Abstände des geparkten Fahrzeugs zu beiden zugehörigen seitlichen Parkplatzbegrenzungen gemessen, um so die Querposition des geparkten Fahrzeugs zu ermitteln.

Um die Zuverlässigkeit des Verfahrens zu erhöhen, können mittels der Messeinrichtung die Parkpositionen mehrerer geparkter Fahrzeuge auf verschiedenen benachbarten Parkplätzen ermittelt und bei der Festlegung der Parkposition des Fahrzeugs berücksichtigt werden. Vorzugsweise wird dabei aus den Querpositionen der geparkten Fahrzeuge ein Mittelwert gebildet, wobei die Parkposition des Fahrzeugs anhand des Mittelwertes festgelegt wird.

Die Parkposition des zu parkenden Fahrzeugs kann besonders einfach und zuverlässig derart festgelegt werden, dass ein seitlicher Abstand des Fahrzeugs zur zugehörigen Parkraumbegrenzung im Wesentlichen dem seitlichen Abstand des geparkten Fahrzeugs zu dessen Parkplatzbegrenzung bzw. dem Mittelwert der seitlichen Abstände der mehreren geparkten Fahrzeuge entspricht.

Um die Festlegung der Parkposition noch weiter zu verbessern, kann die Parkposition des zu parkenden Fahrzeugs derart festgelegt werden, dass auf beiden Fahrzeugseiten die seitlichen Abstände des Fahrzeugs zur zugehörigen Parkplatzbegrenzung jeweils im Wesentlichen dem entsprechenden seitlichen Abstand des geparkten Fahrzeugs zu dessen Parkplatzbegrenzung bzw. dem jeweiligen Mittelwert des seitlichen Abstandes der mehreren geparkten Fahrzeuge entsprechen.

Die Breite des Parkplatzes kann während einer Vorbeifahrt des Fahrzeugs am Parkplatz entlang der Fahrbahn durch eine Parklückenmesseinrichtung ermittelt werden, wobei die Parkposition des wenigstens einen geparkten Fahrzeugs vor dem Passieren des Parkplatzes während einer Vorbeifahrt des Fahrzeugs an dem benachbarten Parkplatz durch die Parklückenmesseinrichtung erfasst wird.

Um einen besonders zuverlässigen und komfortablen Einparkvorgang zu ermöglichen, kann Lenkung des Fahrzeugs beim Einparkvorgang von der Auswerteeinheit entsprechend der Einparkbahn angesteuert werden.

Zur Unterstützung des Einparkvorgangs können dem Fahrer auch über eine Ausgabeeinrichtung Informationen zur Führung des Fahrzeuges entlang der Einparkbahn übermittelt werden.

Bei dem geparkten Fahrzeug handelt es sich insbesondere um ein Fahrzeug, das nicht unmittelbar benachbart zum Parkplatz angeordnet ist und somit nicht selbst die Begrenzung des Parkplatzes bildet. Es wird somit bei der Bestimmung der Parkposition des geparkten Fahrzeugs ein seitlicher Abstand zwischen zwei Fahrzeuge ermittelt, von denen höchstens eines unmittelbar neben dem Parkplatz angeordnet ist.

Nachfolgend wird ein Ausführungsbeispiel der Erfindung anhand einer zeichnerischen Darstellung näher erläutert.

In der Darstellung zeigen jeweils in schematischer Draufsicht:

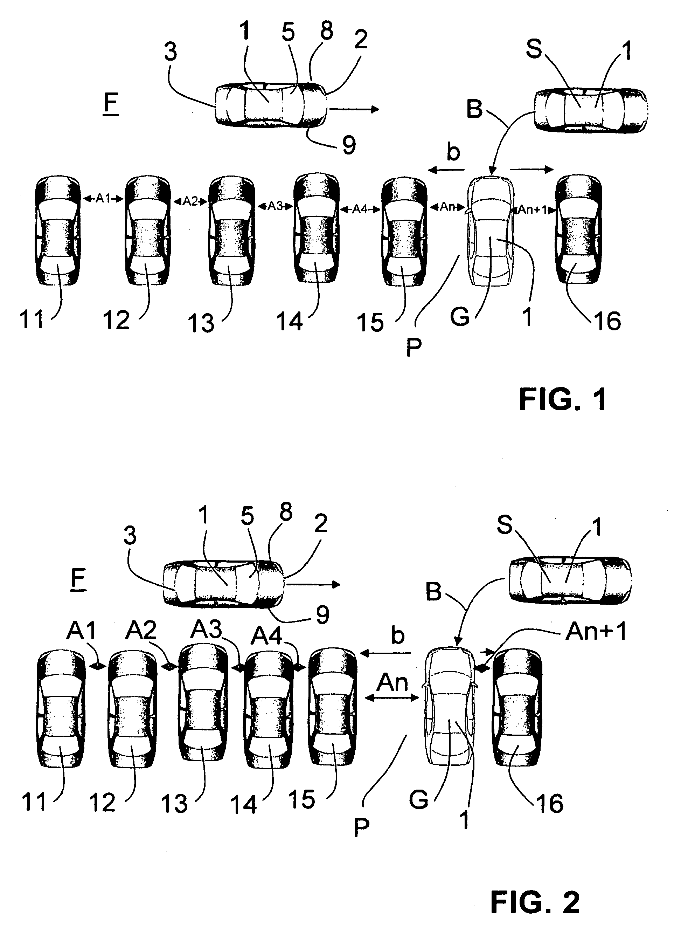

- Fig. 1 und 2: Einparkvorgänge eines Fahrzeugs in einen quer zu einer Fahrbahn angeordneten Parkplatz.

Die Fig. 1 und 2 zeigen in schematisierter Draufsicht Einparkvorgänge eines Fahrzeugs 1 in einen Parkplatz P bzw. P', der quer zu einer Fahrbahn F angeordnet ist. Der Parkplatz P ist seitlich jeweils durch ein geparktes Fahrzeug 15 und 16 begrenzt und weist eine Breite b auf, welche dem seitlichen Abstand der beiden geparkten Fahrzeuge 15 und 16 entspricht. Benachbart zum Parkplatz P bzw. P' sind weitere Parkplätze angeordnet, die im Wesentlichen parallel zum Parkplatz P bzw. P' und somit ebenfalls quer zur Fahrbahn F angeordnet sind. Die Parkplätze sind seitlich durch wenigstens ein Fahrzeug 11 - 15 begrenzt, das auf einem benachbartem Parkplatz geparkt ist und weisen jeweils einen zugehörigen seitlichen Abstand A1 - A4 zu diesem auf.

Das als Personenkraftwagen ausgebildete Fahrzeug 1 weist einen Bugbereich 2 und Heckbereich 3 sowie einen hinter einer Windschutzscheibe angeordneten Fahrerplatz 5 auf. Bei dem als Linkslenker ausgebildeten Fahrzeug 1 ist der Fahrerplatz 5 dabei auf der linken Fahrzeugseite angeordnet, so dass die linke Fahrzeugseite eine Fahrerseite und die rechte Fahrzeugseite eine Beifahrerseite des Fahrzeugs 1 bildet. Die Mittel-Längsachse des Fahrzeugs verläuft in Längsrichtung des Fahrzeugs 1 in halbem Breitenabstand zwischen Fahrer- und Beifahrerseite.

Das Fahrzeug 1 umfasst eine Vorrichtung zur Unterstützung eines Einparkvorgangs mit einer Messeinrichtung und einer nicht gezeigten Auswerteeinrichtung. Die Messeinrichtung umfasst zwei seitliche Abstandssensoren 8 und 9, die jeweils nahe dem Fahrzeugbug 2 auf der Fahrer- bzw. Beifahrerseite des Fahrzeugs 1 angeordnet sind. Die Abstandssensoren 8 und 9 sind als an sich bekannte Ultraschall-Abstandssensoren ausgebildet und jeweils an einem seitlichen Rand eines nicht gezeigten vorderen Stoßfängers des Fahrzeugs 1 angeordnet. Alternativ könnte die Abstandssensoren 8 und 9 aber auch nahe dem Fahrzeugheck 3, z. B an einem Heckstoßfänger angeordnet sein.

Die Abstandssensoren 8 und 9 sowie ein nicht gezeigter Wegsensor zur Ermittlung eines Fahrwegs des Fahrzeugs 1 sind mit einem nicht gezeigten Steuergerät verbunden, welches die Abstandsensoren 8 und 9 so angesteuert, dass bei der Vorbeifahrt des Fahrzeugs 1 entlang der Fahrbahn F die Breite b des Parkplatzes P bzw. P' vermessen wird. Darüber hinaus können noch weitere geometrische Daten, wie die Tiefe und die Orientierung des Parkplatzes relativ zur Fahrbahn F durch Messung ermittelt werden. Die Breite b und den ggf. zusätzliche ermittelten geometrischen Daten sind an eine Auswerteeinheit übertragbar, welche vorzugsweise integral mit dem Steuergerät ausgebildet ist.

Darüber hinaus sind die Abstandssensoren 8 und 9 dazu ausgebildet, während einer Vorbeifahrt des Fahrzeugs 1 an den Parkplätzen die seitlichen Abstände A1 - A5 der geparkten Fahrzeugen 11 - 15 untereinander zu bestimmen und ebenfalls an die Auswerteeinrichtung zu übertragen. Die Auswerteeinrichtung ist dann dazu ausgebildet, die ermittelten seitlichen Abstände A1 - A5 zu speichern und zusätzlich zur Breite b und die ggf. zusätzliche ermittelten geometrischen Daten des Parkplatzes P bzw. P' selbst bei der Festlegung der Parkposition G zu berücksichtigen.

Die Auswerteeinheit umfasst einen Programmcode, um anhand der Breite b des Parkplatzes P bzw. P' zunächst eine Parkposition G bzw. G' des Fahrzeugs 1 innerhalb des Parkplatzes P bzw. P' festzulegen und nachfolgend ausgehend von einer Startposition S des Fahrzeugs 1 eine Einparkbahn B zu ermitteln, entlang welcher das Fahrzeug 1 eine seine Parkposition G gefahren wird. Die Auswerteeinheit ist dabei über ein Bussystem des Fahrzeugs 1 mit einer nicht gezeigten Lenkung des Fahrzeugs 1 verbunden, um beim Einparken des Fahrzeugs 1 die Lenkung derart anzusteuern, dass das Fahrzeug 1 ausgehend von der Startposition S entlang der Einparkbahn B in seine Parkposition G überführt wird. Die Längsregelung des Fahrzeugs 1, d. h. Gasgeben und Bremsen, wird dabei durch den Fahrer selbst vorgenommen. Alternativ könnte die Auswerteeinheit aber auch über das Datenbussystem mit Motorsteuerung und Bremse des Fahrzeugs 1 verbunden sein, um einen vollautonomen Einparkvorgang zu ermöglichen. Die Auswerteeinheit ist ferner dazu vorgesehen, dem Fahrer Informationen in Bezug auf den Einparkvorgang über eine Ausgabeeinrichtung, wie z. B. einem im Wageninnenraum angeordneten Display und/oder Tongeber auszugeben. Dabei können dem Fahrer z. B. Anweisungen in Bezug auf die Längssteuerung des Fahrzeugs 1 aber auch zur Ansteuerung der Startposition S zu übermitteln. Des Weiteren können dem Fahrer auch Anweisungen zur Lenkung des Fahrzeugs 1 gegeben werden. Dabei ist es möglich, dem Fahrer Anweisungen zur manuellen Einstellung von bestimmten Lenkwinkeln zu übermitteln, so dass der Einparkvorgang vom Fahrer manuell anhand der Steueranweisung der Ausgabeeinrichtung vorgenommen wird. Auf eine Ansteuerung der Lenkung durch die Auswerteeinrichtung kann dabei verzichtet werden.

Die Festlegung der Parkposition G bzw. G' des Fahrzeugs 1 innerhalb des Parkplatzes P bzw. P' erfolgt gemäß folgendem Ablauf:
Ermittlung der seitlichen Abstände A1 - A4 der geparkten Fahrzeuge 11 - 15 mittels der Messeinrichtung während einer Vorbeifahrt des Fahrzeugs 1 an den Parkplätzen entlang der Fahrbahn F und anschließend Vermessen des Parkplatzes P bzw. P' mittels der Messeinrichtung während einer Vorbeifahrt des Fahrzeugs 1 am Parkplatz P bzw. P'.

Festlegung einer Parkposition G des Fahrzeugs 1 innerhalb des Parkplatzes P bzw. P' anhand der Abmessungen des Parkplatzes P bzw. P' und der Abstände A1 - A4. Bei Festlegung der Parkposition G wird zunächst geprüft, ob die Breite b des Parkplatzes P bzw. P' eine vorgegebene Mindestbreite b1 unter- oder eine Maximalbreite b2 überschreitet. Die Mindestbreite b1 ist dabei so bemessen, dass auf dem Parkplatz P bzw. P' ein nebeneinander Parken von zwei Fahrzeugen üblicher Breite ausgeschlossen ist. Bei Unterschreiten der Mindestbreite wird die Parkposition G des Fahrzeugs 1 von der Auswerteeinrichtung mittig auf dem Parkplatz angeordnet, d. h. in der Parkposition G verläuft die Mittel-Längsachse des Fahrzeugs 1 etwa deckungsgleich zur Mittel-Längsachse des Parkplatzes P und das Fahrzeug 1 weist zu den Begrenzungen 15 und 16 etwa die selben seitlichen Abstände An und An+1 auf.

Bei Überschreiten der Mindestbreite b1 können grundsätzlich zwei Fahrzeuge üblicher Breite auf dem Parkplatz P bzw. P' nebeneinander geparkt werden, wobei ein Ein- und Ausstieg der Fahrzeuginsassen noch möglich sein soll. Die Mindestbreite b-min entspricht dabei etwa der 2,5fachen Fahrzeugbreite des Fahrzeugs 1. Zur Entscheidung, ob die Parkposition G bei Überschreiten der Mindestbreite b1 mittig oder außermittig auf dem Parkplatz P bzw. P' anzuordnen ist, werden nun zusätzlich die ermittelten Anstände A1 - A4 herangezogen. Dabei wird aus den Abständen A1 - A4 ein Mittelwert gebildet. Die Auswerteeinrichtung prüft dann, welche Abstände An bzw. An+1 das Fahrzeug 1 bei mittiger Parkposition G von den Begrenzungen 15 und 16 aufweist. Falls die Abstände An bzw. An+1 nicht mehr als eine vorgegebenen Toleranzwert voneinander abweichen, wird die Parkposition G von der Auswerteeinrichtung ebenfalls mittig auf dem Parkplatz angeordnet.

Falls die Abstände An bzw. An+1 demgegenüber um mehre als den vorgegebenen Toleranzwert voneinander abweichen, wird die Parkposition G' von der Auswerteeinrichtung derart außermittig auf dem Parkplatz P' angeordnet, dass neben dem Fahrzeug 1 wenigstens noch ein weiteres Fahrzeug üblicher Breite geparkt werden kann. Die alternative Parkposition G' weist somit einen Abstand d zur Mittel-Längsachse des Parkplatzes P' auf, d. h. in der alternativen Parkposition G' verläuft die Mittel-Längsachse des Fahrzeugs 1 parallel im Abstand von der Mittel-Längsachse des Parkplatzes P'.

Die Parkposition G' wird derart ermittelt, dass das geparkte Fahrzeug 1 mit einer Fahrzeugseite oder in einem vorgegebenen, in der Auswerteeinheit gespeicherten Abstand a1 von der benachbarten Begrenzung des Parkplatzes P' angeordnet ist. Dabei wird gemäß dem Programmcode der Auswerteinheit nach Möglichkeit die Beifahrerseite des Fahrzeugs 1 in einem Abstand a1 zur benachbarten Begrenzung angeordnet. Wenn von der Messeinrichtung jedoch neben der Beifahrerseite keine entsprechende seitliche Begrenzung erkannt wird, d. h. der Parkplatz P' ist entweder sehr breit oder nur auf einer Seite seitlich begrenzt, wird die Parkposition G' von der Auswerteeinheit so festgelegt, dass die Fahrerseite des Fahrzeugs 1 in der Parkposition G in einem vorgegebenen, in der Auswerteeinheit gespeichertem Abstand a2 von der benachbarten Begrenzung angeordnet ist. Als Abstand a1 bzw. 2 wird von der Auswerteeinheit dabei vorzugsweise der Mittelwert der Abstände A1 - A4 verwendet.

Alternativ könnte der Programmcode der Auswerteeinheit aber auch so ausgelegt sein, dass die Parkposition G' des Fahrzeugs 1 stets so festgelegt wird, dass das Fahrzeug 1 in der Parkposition G in einem vorgegebenen seitlichen Abstand zu dem Hindernis 10 bzw. 11 angeordnet ist, welches bei Begin des Einparkvorgangs den geringeren Abstand zum Fahrzeug 1 aufweist oder mit der geringsten Anzahl von Einparkzügen erreicht werden kann. Dabei kann der Fahrer des Fahrzeugs 1 die Festlegung der Parkposition G' durch eine entsprechende Vorgabe der Startposition S beeinflussen. Zusätzlich wäre aber auch eine Beeinflussung der Parkposition G' durch ein vom Fahrer zu betätigendes Auswahlmittel oder einen Lenkeingriff des Fahrers während des Einparkvorgangs möglich.

Die Angaben in Bezug auf die Parkposition G gelten entsprechend seitenverkehrt für Rechtslenker-Kraftwagen, bei denen die rechte Fahrzeugseite die Fahrerseite bildet. Zur Festlegung der Parkposition G bzw. G' kann zusätzlich noch die Orientierung, d. h. die Winkellage wenigstens eines geparkten Fahrzeugs 11 - 15 vom der Messeinrichtung ermittelt und dann nachfolgend von der Auswerteeinrichtung zur Festlegung der Orientierung der Parkposition G bzw. G' des Fahrzeugs 1 herangezogen werden, insbesondere derart, dass die Orientierung des Fahrzeugs 1 in der Parkposition G bzw. G' der Orientierung eines der geparkten Fahrzeuge 11 - 15 oder dem Mittelwert von deren Orientierungen entspricht.

Zum Einparken in einen Parkplatz P bzw. P' steuert der Fahrer das Fahrzeug 1 zunächst entlang der Fahrbahn F quer an den Parkplätzen, wobei mittels des seitlichen Abstandssensors 9 und des nicht gezeigten Wegsensors die seitlichen Abstände A1 - A4 zwischen den geparkten Fahrzeugen 11 - 15 ermittelt werden, und anschließend am Parkplatz P bzw. P' vorbei. Bei der Vorbeifahrt am Parkplatz P bzw. P' werden die Breite b sowie ggf. andere geometrische Daten des Parkplatzes P bzw. P' von der Messeinrichtung mittels des seitlichen Abstandssensors 9 und des nicht gezeigten Wegsensors ermittelt. Die Daten werden von der Messeinrichtung an die Auswerteeinheit übertragen, welche dann eine Startposition S für den Einparkvorgang, die Parkposition G bzw. G' des Fahrzeugs 1 innerhalb des Parkplatzes P bzw. P' sowie eine Einparkbahn B festlegt. Nach Passieren des Parkplatzes P bzw. P' wird das Fahrzeug 1 vom Fahrer vorübergehend in einer Startposition S gestoppt, wobei die Auswerteeinheit dem Fahrer das Erreichen einer möglichen Startposition S über das zentrale Display des Fahrzeugs 1 anzeigt.

Nach Stoppen des Fahrzeugs 1 in der Startposition S leitet der Fahrer durch Einlegen eines Rückwärtsganges den Einparkvorgang ein. Dabei steuert der Fahrer durch Gas- und Bremseingriffe die Fahrgeschwindigkeit des Fahrzeugs 1, während die Auswerteeinrichtung über das Bussystems des Fahrzeugs 1 selbsttätig die Lenkung entsprechend der Einparkbahn B betätigt. Das Fahrzeug 1 fährt dann ausgehend von der Startposition S rückwärts entlang der Einparkbahn B in seine Parkposition G bzw. G'.

Nachfolgend werden anhand der Fig. 1 - 2 Einparkvorgänge des Fahrzeugs 1 in Parkplätze P und P' näher erläutert. Die Parkplätze P in Fig. 1 und P' in Fig. 2 weisen jeweils dieselbe Breite b auf, welche die Mindestbreite b1 überschreitet. Die Festlegung der Parkposition P bzw. P' erfolgt daher jeweils unter Berücksichtigung der seitlichen Abstände A1 - A4 der geparkten Fahrzeuge 11 - 15.

In der Ausführungsform gemäß Fig. 1 sind die Fahrzeuge 11 - 15 in verhältnismäßig großen seitlichen Abständen voneinander angeordnet. Daher wird die Parkposition G des Fahrzeugs 1 mittig auf dem Parkplatz P angeordnet. In der Parkposition G steht somit seitlich neben der Fahrer- und der Beifahrerseite etwa der gleiche Abstand zum benachbarten geparkten Fahrzeug 10 bzw. 11 zur Verfügung, wodurch für Fahrer und Beifahrer ein bequemer Ein- und Ausstieg möglich ist.

In der Ausführungsform gemäß Fig. 2 sind die Fahrzeugs 11 - 15 demgegenüber in verhältnismäßig kleinen seitlichen Abständen voneinander angeordnet. Daher wird die Parkposition G' des Fahrzeugs 1 außermittig auf dem Parkplatz P' angeordnet, d. h. in der in Fig. 2 dargestellten Parkposition G' verläuft die Mittel-Längsachse A des Fahrzeugs 1 im Wesentlichen parallel in einem seitlichen Abstand zur Mittel-Längsachse des Parkplatzes P'. Die Parkposition G' wird dabei so festgelegt, dass das Fahrzeug 1 in seiner Parkposition G mit seiner Beifahrerseite in einem vorgegebenen, in der Auswerteeinheit gespeicherten Abstand a1 vom benachbarten geparkten Fahrzeug 10 angeordnet ist. Der Abstand a1 ist dabei so bemessen, dass in der Parkposition G des Fahrzeugs 1 noch ein Ein- und Ausstieg von Fahrzeuginsassen auf der Beifahrerseite des Fahrzeugs 1 möglich ist. In Fig. 2 ist unmittelbar ersichtlich, dass in der Parkposition G' des Fahrzeugs 1 seitlichen neben dem Fahrzeug 1 noch ein weiterer Kraftwagen üblicher Breite geparkt werden kann.

## Patentansprüche

1. Verfahren zur Unterstützung eines Einparkvorgangs eines Fahrzeugs (1) in einen quer zu einer Fahrbahn (F) angeordneten Parkplatz (P, P'), der auf wenigstens einer Seite durch eine seitliche Begrenzung (15, 16) begrenzt ist mit den Schritten:
Ermittlung einer Breite (b) des Parkplatzes (P, P') mittels einer Messeinrichtung (9),
Festlegung einer Parkposition (G, G') des Fahrzeugs () innerhalb des Parkplatzes (P, P') mittels einer Auswerteeinrichtung und
Bestimmung einer Einparkbahn (B) des Fahrzeuges (1) in die Parkposition (G, G') mittels der Auswerteeinrichtung,
wobei mittels der Messeinrichtung (9) eine Parkposition wenigstens eines geparkten Fahrzeugs (11 - 15) in einem benachbarten Parkplatz ermittelt wird, wobei die ermittelte Parkposition von der Auswerteeinrichtung bei der Festlegung der Parkposition (G, G') des Fahrzeugs (1) berücksichtigt wird **dadurch gekennzeichnet,**
**dass** bei der Ermittlung der Parkposition des geparkten Fahrzeugs (11) die seitlichen Abstände(A1 - A4) des geparkten Fahrzeugs (11 - 15) zu beiden seitlichen Parkplatzbegrenzungen gemessen wird.

2. Verfahren nach einem der vorhergehenden Ansprüche,
**dadurch gekennzeichnet,**
**dass** mittels der Messeinrichtung (9) die Parkpositionen mehrerer geparkter Fahrzeuge (11 - 15) in benachbarten Parkplätzen ermittelt und bei der Festlegung der Parkposition (G, G') des Fahrzeugs (1) berücksichtigt werden.

3. Verfahren nach Anspruch 2,
**dadurch gekennzeichnet,**
**dass** aus den Parkpositionen der geparkten Fahrzeuge (11 - 15) ein Mittelwert gebildet wird, wobei die Parkposition (G, G') des Fahrzeugs (1) anhand des Mittelwertes festgelegt wird.

4. Verfahren nach einem der vorhergehenden Ansprüche,
**dadurch gekennzeichnet,**
**dass** die Parkposition (G, G') des Fahrzeugs (1) derart festgelegt wird, dass wenigstens ein seitlicher Abstand (An, An+1) des Fahrzeugs (1) zur zugehörigen Parkraumbegrenzung (15, 16) im Wesentlichen dem seitlichen Abstand (A1 - A4) des geparkten Fahrzeugs (11 - 15) zu dessen Parkplatzbegrenzung bzw. dem Mittelwert der seitlichen Abstände (A1 - A4) der mehreren geparkten Fahrzeuge (11 - 15) entspricht.

5. Verfahren nach Anspruch 4,
**dadurch gekennzeichnet,**
**dass** die Parkposition (G, G') des Fahrzeugs (1) derart festgelegt wird, dass auf beiden Fahrzeugseiten die seitlichen Abstände (An, An+1) des Fahrzeugs (1) zur zugehörigen Parkplatzbegrenzung (15, 16) jeweils im Wesentlichen dem entsprechenden seitlichen Abstand (A1 - A4) des geparkten Fahrzeugs (11 - 15) zu dessen Parkplatzbegrenzung bzw. dem Mittelwert des seitlichen Abstands (A1 - A4) der mehreren geparkten Fahrzeuge (11 - 15) entsprechen.

6. verfahren nach einem der vorhergehenden Ansprüche,
**dadurch gekennzeichnet,**
**dass** die Breite (b) des Parkplatzes (P, P') während einer Vorbeifahrt des Fahrzeugs (1) am Parkplatz (P, P') entlang der Fahrbahn (F) ermittelt wird, wobei die Parkposition (G, G') des wenigstens einen geparkten Fahrzeugs (1) vor dem Passieren des Parkplatzes (P, P') während einer Vorbeifahrt des Fahrzeugs (1) an dem benachbarten Parkplatz erfasst wird.

7. Verfahren nach einem der vorhergehenden Ansprüche,
**dadurch gekennzeichnet,**
**dass** eine Lenkung des Fahrzeugs (1) beim Einparkvorgang von der Auswerteeinheit entsprechend der Einparkbahn (B) angesteuert wird.

8. Verfahren nach einem der vorgehenden Ansprüche,
**dadurch gekennzeichnet,**
**dass** dem Fahrer beim Einparkvorgang über eine Ausgabeeinrichtung Informationen zur Führung des Fahrzeuges (1) entlang der Einparkbahn (B) übermittelt werden.

9. Vorrichtung zur Unterstützung eines Einparkvorgangs eines Fahrzeugs (1) in einen quer zu einer Fahrbahn (F) angeordneten Parkplatz (P, P') mit einer Messeinrichtung (9), um eine Breite (b) des Parkplatzes (P, P') zu ermitteln, mit einer Auswerteeinrichtung, um eine Parkposition (G, G') des Fahrzeugs (1) innerhalb des Parkplatzes (P, P') festzulegen und um eine Einparkbahn (B) des Fahrzeuges (1) in die Parkposition (G, G') zu bestimmen,
wobei die Messeinrichtung (9) dazu ausgebildet ist, eine Parkposition wenigstens eines geparkten Fahrzeugs (11 - 15) in einem benachbarten Parkplatz zu ermitteln, wobei die Auswerteeinrichtung dazu ausgebildet ist, die ermittelte Parkposition des geparkten Fahrzeugs (11 - 15) bei der Festlegung der Parkposition (G, G') des Fahrzeugs (1) zu berücksichtigen **dadurch gekennzeichnet,**
**dass** die Messeinrichtung (9) dazu ausgebildet ist, die seitlichen Abstände (A1 - A4) des geparkten Fahrzeugs (11 - 15) zu beiden seitlichen Parkplatzbegrenzungen zu messen.

10. Vorrichtung nach Anspruch 9,
**dadurch gekennzeichnet,**
**dass** die Messeinrichtung (9) dazu ausgebildet ist, die Parkpositionen mehrerer geparkter Fahrzeuge (11 - 15) in benachbarten Parkplätzen zu ermitteln, wobei die Auswerteeinrichtung dazu ausgebildet ist, die ermittelten Parkpositionen der geparkten Fahrzeuge (11 - 15) bei der Festlegung der Parkposition (G, G') des Fahrzeugs (1) zu berücksichtigen.

11. Vorrichtung nach einem der Ansprüche 9 - 10,
**dadurch gekennzeichnet,**
**dass** die Messeinrichtung (9) dazu ausgebildet ist, die Breite (b) des Parkplatzes (P, P') und die Parkposition des wenigstens einen geparkten Fahrzeugs (11 - 15) während einer Vorbeifahrt des Fahrzeugs (1) am Parkplatz (P, P') entlang der Fahrbahn (F) zu ermitteln.

## Claims

1. Method for assisting a parking operation of a vehicle (1) into a parking space (P, P') which is arranged transversely with respect to a roadway (F) and is delimited on at least one side by a lateral boundary (15, 16), having the following steps:
determining of a width (b) of the parking space (P, P') by means of a measuring device (9),
fixing of a parking position (G, G') of the vehicle (1) within the parking space (P, P') by means of an evaluation device, and
defining of a parking path (B) of the vehicle (1) into the parking position (G, G') by means of the evaluation device,
a parking position of at least one parked vehicle (11-15) in an adjacent parking space being determined by means of the measuring device (9), the determined parking position being taken into consideration by the evaluation device during the fixing of the parking position (G, G') of the vehicle (1),
**characterized**
**in that**, during the determining of the parking position of the parked vehicle (11), the lateral spacings (A1-A4) of the parked vehicle (11-15) from both lateral parking-space boundaries being measured.

2. Method according to one of the preceding claims, **characterized in that** the parking positions of a plurality of parked vehicles (11-15) in adjacent parking spaces are determined by means of the measuring device (9) and are taken into consideration during the fixing of the parking position (G, G') of the vehicle (1).

3. Method according to Claim 2, **characterized in that** the mean value is formed from the parking positions of the parked vehicles (11-15), the parking position (G, G') of the vehicle (1) being fixed using the mean value.

4. Method according to one of the preceding claims, **characterized in that** the parking position (G, G') of the vehicle (1) is fixed in such a way that at least one lateral spacing (An, An+1) of the vehicle (1) from the associated parking spatial boundary (15, 16) corresponds substantially to the lateral spacing (A1-A4) of the parked vehicle (11-15) from its parking-space boundary or the mean value of the lateral spacings (A1-A4) of the plurality of parked vehicles (11-15).

5. Method according to Claim 4, **characterized in that** the parking position (G, G') of the vehicle (1) is fixed in such a way that the lateral spacings (An, An+1) of the vehicle (1) from the associated parking-space boundary (15, 16) on both vehicle sides correspond in each case substantially to the corresponding lateral spacing (A1-A4) of the parked vehicle (11-15) from its parking-space boundary or the mean value of the lateral spacing (A1-A4) of the plurality of parked vehicles (11-15).

6. Method according to one of the preceding claims, **characterized in that** the width (b) of the parking space (P, P') is determined while the vehicle (1) drives along the roadway (F) past the parking space (P, P'), the parking position (G, G') of the at least one parked vehicle (1) being determined before the parking space (P, P') is passed while the vehicle (1) drives past the adjacent parking space.

7. Method according to one of the preceding claims, **characterized in that** a steering system of the vehicle (1) is actuated by the evaluation unit during the parking operation in a manner which corresponds to the parking path (B).

8. Method according to one of the preceding claims, **characterized in that** information with respect to steering the vehicle (1) along the parking path (B) is imparted via an output device to the driver during the parking operation.

9. Apparatus for assisting a parking operation of a vehicle (1) into a parking space (P, P') which is arranged transversely with respect to a roadway (F), having a measuring device (9), in order to determine a width (b) of the parking space (P, P'), having an evaluation device, in order to fix a parking position (G, G') of the vehicle (1) within the parking space (P, P') and in order to define a parking path (B) of the vehicle (1) into the parking position (G, G'), the measuring device (9) being configured for determining a parking position of at least one parked vehicle (11-15) in an adjacent parking space, the evaluation device being configured for taking the determined parking position of the parked vehicle (11-15) into consideration during the fixing of the parking position (G, G') of the vehicle (1), **characterized in that** the measuring device (9) is configured for measuring the lateral spacings (A1-A4) of the parked vehicle (11-15) from both lateral parking-space boundaries.

10. Apparatus according to Claim 9, **characterized in that** the measuring device (9) is configured for determining the parking position of a plurality of parked vehicles (11-15) in adjacent parking spaces, the evaluation device being configured for taking the determined parking positions of the parked vehicles (11-15) into consideration during the fixing of the parking position (G, G') of the vehicle (1).

11. Apparatus according to either of Claims 9 and 10, **characterized in that** the measuring device (9) is configured for determining the width (b) of the parking space (P, P') and the parking position of the at least one parked vehicle white the vehicle (1) is driving along the roadway (F) past the parking space (P, P').

## Revendications

1. Procédé d'assistance à une manoeuvre d'entrée en stationnement d'un véhicule (1) dans un emplacement de stationnement (P, P') disposé transversalement par rapport à une voie de circulation (F), lequel est délimité sur au moins un côté par une délimitation latérale (15, 16), comprenant les étapes suivantes :
détermination d'une largeur (b) de l'emplacement de stationnement (P, P') au moyen d'un dispositif de mesure (9),
fixation d'une position de stationnement (G, G') du véhicule (1) à l'intérieur de l'emplacement de stationnement (P, P') au moyen d'un dispositif d'interprétation et
définition d'une trajectoire d'entrée en stationnement (B) du véhicule (1) dans la position de stationnement (G, G') au moyen du dispositif d'interprétation,
une position de stationnement d'au moins un véhicule stationné (11 - 15) dans un emplacement de stationnement voisin étant déterminée au moyen du dispositif de mesure (9), la position de stationnement déterminée étant prise en compte par le dispositif d'interprétation lors de la fixation de la position de stationnement (G, G') du véhicule (1),
**caractérisé en ce**
**que** lors de la détermination de la position de stationnement du véhicule stationné (11), les écarts latéraux (A1 - A4) du véhicule stationné (11 - 15) par rapport aux deux délimitations latérales de l'emplacement de stationnement sont mesurés.

2. Procédé selon l'une des revendications précédentes, **caractérisé en ce que** les positions de stationnement de plusieurs véhicules stationnés (11 - 15) dans des emplacements de stationnement voisins sont déterminées au moyen du dispositif de mesure (9) et sont prises en compte lors de la fixation de la position de stationnement (G, G') du véhicule (1).

3. Procédé selon la revendication 2, **caractérisé en ce qu'**une valeur moyenne est calculée à partir des positions de stationnement des véhicules stationnés (11 - 15), la position de stationnement (G, G') du véhicule (1) étant fixée à l'aide de la valeur moyenne.

4. Procédé selon l'une des revendications précédentes, **caractérisé en ce que** la position de stationnement (G, G') du véhicule (1) est fixée de telle sorte qu'au moins un écart latéral (An, An+1) du véhicule (1) par rapport à la délimitation associée de l'espace de stationnement (15, 16) correspond pour l'essentiel à l'écart latéral (A1 - A4) du véhicule stationné (11 - 15) par rapport à la délimitation de son emplacement de stationnement ou à la valeur moyenne des écarts latéraux (A1 - A4) des plusieurs véhicules stationnés (11 - 15).

5. Procédé selon la revendication 4, **caractérisé en ce que** la position de stationnement (G, G') du véhicule (1) est fixée de telle sorte que des deux côtés du véhicule, les écarts latéraux (An, An+1) du véhicule (1) par rapport à la délimitation associée de l'emplacement de stationnement (15, 16) correspondent respectivement pour l'essentiel à l'écart latéral (A1 - A4) correspondant du véhicule stationné (11 - 15) par rapport à la délimitation de son emplacement de stationnement ou à la valeur moyenne de l'écart latéral (A1 - A4) des plusieurs véhicules stationnés (11 - 15).

6. Procédé selon l'une des revendications précédentes, **caractérisé en ce que** la largeur (b) de l'emplacement de stationnement (P, P') pendant un passage du véhicule (1) au niveau de l'emplacement de stationnement (P, P') le long de la voie de circulation (F) est déterminée, la position de stationnement (G, G') de l'au moins un véhicule (1) stationné étant détectée avant le dépassement de l'emplacement de stationnement (P, P') pendant un passage du véhicule (1) au niveau de l'emplacement de stationnement voisin.

7. Procédé selon l'une des revendications précédentes, **caractérisé en ce qu'**une direction du véhicule (1) est commandée lors de la manoeuvre d'entrée en stationnement par l'unité d'interprétation conformément à la trajectoire d'entrée en stationnement (B).

8. Procédé selon l'une des revendications précédentes, **caractérisé en ce que** lors de la manoeuvre d'entrée en stationnement, des informations relatives au guidage du véhicule (1) le long de la trajectoire d'entrée en stationnement (B) sont communiquées au conducteur par le biais d'un dispositif de diffusion.

9. Dispositif d'assistance à une manoeuvre d'entrée en stationnement d'un véhicule (1) dans un emplacement de stationnement (P, P') disposé transversalement par rapport à une voie de circulation (F), comprenant un dispositif de mesure (9) pour déterminer une largeur (b) de l'emplacement de stationnement (P, P'), comprenant un dispositif d'interprétation pour fixer une position de stationnement (G, G') du véhicule (1) à l'intérieur de l'emplacement de stationnement (P, P') et définir une trajectoire d'entrée en stationnement (B) du véhicule (1) dans la position de stationnement (G, G),
le dispositif de mesure (9) étant configuré pour déterminer une position de stationnement d'au moins un véhicule stationné (11 - 15) dans un emplacement de stationnement voisin, le dispositif d'interprétation étant configuré pour prendre en compte la position de stationnement déterminée du véhicule stationné (11 - 15) lors de la fixation de la position de stationnement (G, G') du véhicule (1),
**caractérisé en ce**
**que** le dispositif de mesure (9) est configuré pour mesurer les écarts latéraux (A1 - A4) du véhicule stationné (11 - 15) par rapport aux deux délimitations latérales de l'emplacement de stationnement.

10. Dispositif selon la revendication 9, **caractérisé en ce que** le dispositif de mesure (9) est configuré pour déterminer les positions de stationnement de plusieurs véhicules stationnés (11 - 15) dans des emplacements de stationnement voisins, le dispositif d'interprétation étant configuré pour prendre en compte les positions de stationnement déterminées des véhicules stationnés (11 - 15) lors de la fixation de la position de stationnement (G, G') du véhicule (1).

11. Dispositif selon l'une des revendications 9 et 10, **caractérisé en ce que** le dispositif de mesure (9) est configuré pour déterminer la largeur (b) de l'emplacement de stationnement (P, P') et la position de stationnement de l'au moins un véhicule stationné (11 - 15) pendant un passage du véhicule (1) au niveau de l'emplacement de stationnement (P, P') le long de la voie de circulation (F).
